Europäisches Patentamt

European Patent Office

Office européen des brevets

(19)

(11) Publication number: **0 418 767 A2**

# EUROPEAN PATENT APPLICATION

(12)

(21) Application number: **90117802.0**

(22) Date of filing: **15.09.90**

(51) Int. Cl.5: **H04N 9/79**

(30) Priority: **19.09.89 JP 243735/89**
**07.03.90 JP 55291/90**

(43) Date of publication of application:
**27.03.91 Bulletin 91/13**

(84) Designated Contracting States:
**DE FR GB NL**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Honjo, Masahiro**
**3-101, 24, Miiminamimachi**
**Neyagawa-shi, Osaka(JP)**

(74) Representative: **Eisenführ, Speiser & Strasse**
**Martinistrasse 24**
**W-2800 Bremen 1(DE)**

(54) **Magnetic recording and reproducing apparatus for wide-band signals.**

(57) A wide-band signal magnetic recording and reproducing apparatus including: a time-base expansion and division device in which during recording, a first video signal is expanded in time base approximately n times (n = natural number ≥ 2) while being simultaneously divided into n channels; a first recording device which frequency modulates the first video signal of each channel so as to generate a first recording signal; an n-channel first recording head device for recording on a recording medium, the first recording signal so as to reproduce an n-channel first modulation signal; a second recording device for modulating a second signal so as to generate a second recording signal; a one-channel second recording head device for recording the second recording signal so as to reproduce a second modulation signal; a first reproduction device which during reproduction, demodulates the first modulation signal so as to generate an n-channel first demodulation signal; a time-base compression device in which the first demodulation signal is compressed in time base and then, is synthesized such that a first reproduction video signal is generated; and a second reproduction device for demodulating the second modulation signal.

Fig. 1

# MAGNETIC RECORDING AND REPRODUCING APPARATUS FOR WIDE-BAND SIGNALS

## BACKGROUND OF THE INVENTION

The present invention relates to a magnetic recording and reproducing apparatus for recording and reproducing high definition television (HDTV) signals.

One type known VTR (video tape recorder) for recording NTSC signals employs color-under technique, for example, VHS format, in which a luminance signal is frequency modulated and a color signal is converted into a low-band signal and these signals are frequency multiplexed to a single signal such that the single signal is recorded and reproduced by a pair of recording heads on a rotating cylinder.

However, high definition television signals providing images of higher definition, e.g. so-called high vision signals have a frequency band more than 5 times that of the conventional NTSC signals and cannot be recorded or reproduced by the known VTRs.

Furthermore, processing of color signals in conventional color-under technique does not give satisfactory image quality. Meanwhile, in known TCI technique in which the color signal is subjected to significant compression in time base so as to be inserted into time space created by compression of time base of the luminance signal, processing of the color signal is complicated. In addition, it is necessary to simultaneously record and reproduce sounds of high quality.

## SUMMARY OF THE INVENTION

Therefore, an essential object of the present invention is to provide a magnetic recording and reproducing apparatus which has a recording capacity capable of recording and reproducing high definition television signals.

Another important object of the present invention is to provide a magnetic recording and reproducing apparatus which improves signal-to-noise ratio of a color signal and is capable of not only recording and reproducing audio signals of high quality but increasing recording density so as to lengthen recording and reproduction time.

In order to accomplish these objects of the present invention, there is provided a magnetic recording and reproducing apparatus according to the present invention in which at the time of recording, a first video signal is expanded in time base approximately n times while being simultaneously divided into n channels where character n denotes a natural number not less than 2 and, after frequency modulation of the expanded first video signal, the modulated signal is recorded by an n-channel first recording head, while a second signal is modulated and recorded by a one-channel second recording head. At the time of reproduction, the n-channel first modulation signal reproduced by the first recording head is demodulated and then, is compressed in time base at each channel so as to be synthesized such that a first reproduction video signal is obtained, while the second modulation signal reproduced by the one-channel second recording head is demodulated such that a second reproduction signal is obtained.

In one preferred embodiment, the first video signal is a luminance signal, while the second signal is a sline sequential color difference signal in which two color difference signals are alternately selected as a single signal at an interval of a horizontal period.

Alternatively, the signal to be recorded by the second recording head may be a signal obtained by frequency multiplexing a signal in which after two color difference signals have been converted into a single color signal, the single color signal is frequency modulated to a high band and a signal in which an audio signal has been frequency modulated or pulse code modulated to a low band.

Alternatively, it can also be so arranged that the first video signal is a single time-base multiplex signal in which the luminance signal and the color difference signal are compressed in time base, while the second signal is an audio signal.

Meanwhile, it is preferable that the first and second recording tracks may overlap.

By the above described arrangement of the magnetic recording and reproducing apparatus of the present invention, recording capacity enabling recording and reproduction of high definition television signals can be obtained and signal-to-noise ratio of the color signal can be improved. Furthermore, it becomes possible to record and reproduce audio signals of high quality. Moreover, since recording density is raised by overlapping the first and second recording tracks, recording and reproduction time can be extended.

## BRIEF DESCRIPTION OF THE DRAWINGS

These objects and features of the present invention will become apparent from the following description taken in conjunction with the preferred embodiments thereof with reference to the accompanying drawings, in which:

Fig. 1 is a block diagram of a magnetic recording and reproducing apparatus according to a first embodiment of the present invention;

Figs. 2A to 2H show spectra of sections of the apparatus of Fig. 1, respectively;

Fig. 3 is a block diagram of a time-base expansion divider employed in the apparatus of Fig. 1;

Figs. 4A to 4D are diagrams showing wave forms of portions of the time-base expansion divider of Fig. 3;

Figs. 5A to 9A are views showing various positions of heads of the apparatus of Fig. 1, respectively;

Figs. 5B to 9B are views showing recording patterns on a tape obtained at the positions of the heads of Figs. 5A to 9A, respectively; and

Fig. 10 is a block diagram of a magnetic recording and reproducing apparatus according to a second embodiment of the present invention.

Before the description of the present invention proceeds, it is to be noted that like parts are designated by like reference numerals throughout several views of the accompanying drawings.

## DETAILED DESCRIPTION OF THE INVENTION

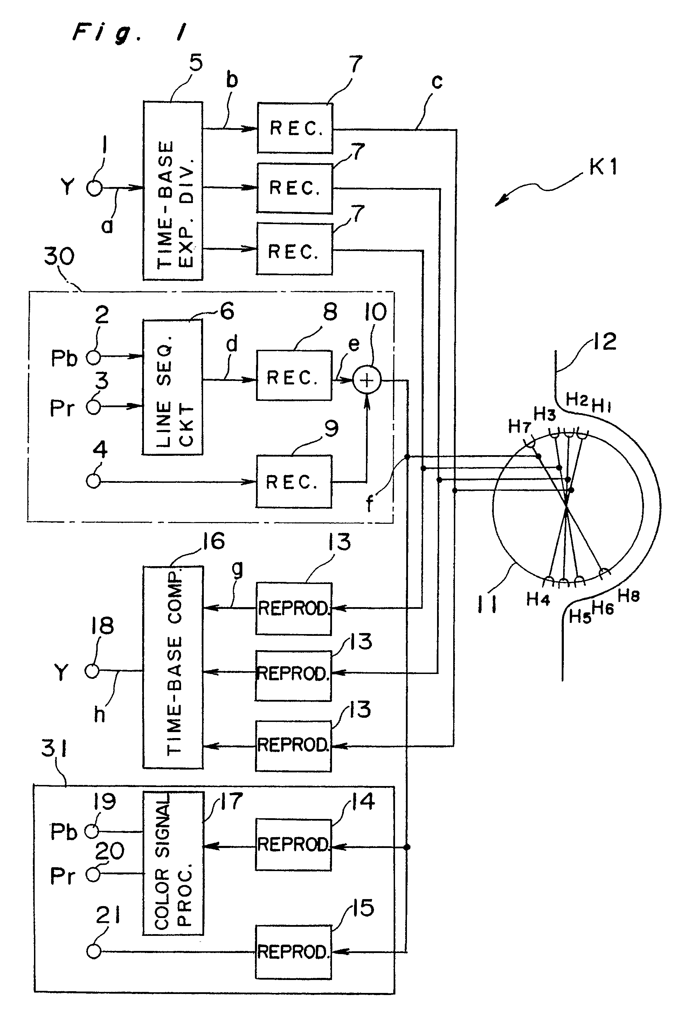

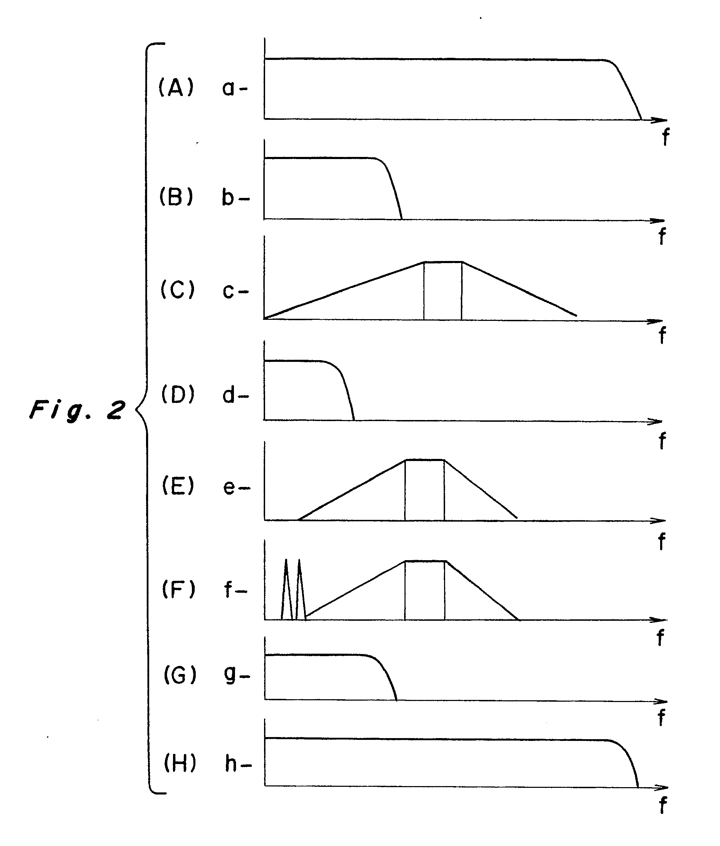

Fig. 1 shows a magnetic recording and reproducing apparatus K1 according to a first embodiment of the present invention and Figs. 2A to 2H show spectra of sections of the apparatus K1, respectively. In this embodiment, a luminance signal is employed as a first video signal, while a color difference signal and an audio signal are employed as a second signal. A luminance signal a inputted from a terminal 1 is expanded in time base approximately three times and simultaneously divided into three channels by a time-base expansion divider 5. At each channel, a luminance signal b which occupies about one-third of a frequency band due to time-base expansion is frequency modulated into a signal c by a recording unit 7 such that the signal c is recorded on a magnetic tape 12 by three-channel heads H1, H2, H3, H4, H5 and H6 disposed on a rotating cylinder 11.

A recording processing circuit 30 for the second signal is described, hereinbelow. Two color difference signals Pb and Pr inputted to terminals 2 and 3, respectively are alternately selected as a single line sequential color signal d at an interval of a horizontal period by a line sequential circuit 6. Then, the single line sequential color signal d is frequency modulated into a signal e by a recording unit 8 such that the signal e is, in turn, outputted to a synthesizer 10.

Meanwhile, an audio signal inputted to a terminal 4 is frequency modulated or pulse code modulated by a recording unit 9 so as to be outputted to the synthesizer 10. The color signal information and the audio signal information are frequency multiplexed into a signal f by the synthesizer 10 such that the signal f is recorded by heads H7 and H8.

At the time of reproduction, the luminance FM signal reproduced from the three-channel heads H1 to H6 passes through a three-channel reproduction unit 13 so as to be converted into a signal g such that the signal g is outputted to a time-base compression circuit 16. The time-base compression circuit 16 compresses and synthesizes time base of each channel three times so as to obtain a single reproduction wide-band luminance signal h such that the luminance signal h is outputted to a terminal 18.

On the other hand, the color signal information and the audio signal information reproduced from the heads H7 and H8 are inputted to a second reproduction processing circuit 31 and is demodulated by reproduction units 14 and 15, respectively. The color signal fed from the reproduction unit 14 is converted from the line sequential signal to the two color difference signals Pb and Pr by a color signal processing circuit 17 such that the color difference signals Pb and Pr are outputted to terminals 19 and 20, respectively. Meanwhile, the audio signal is outputted from the reproduction unit 15 to a terminal 21.

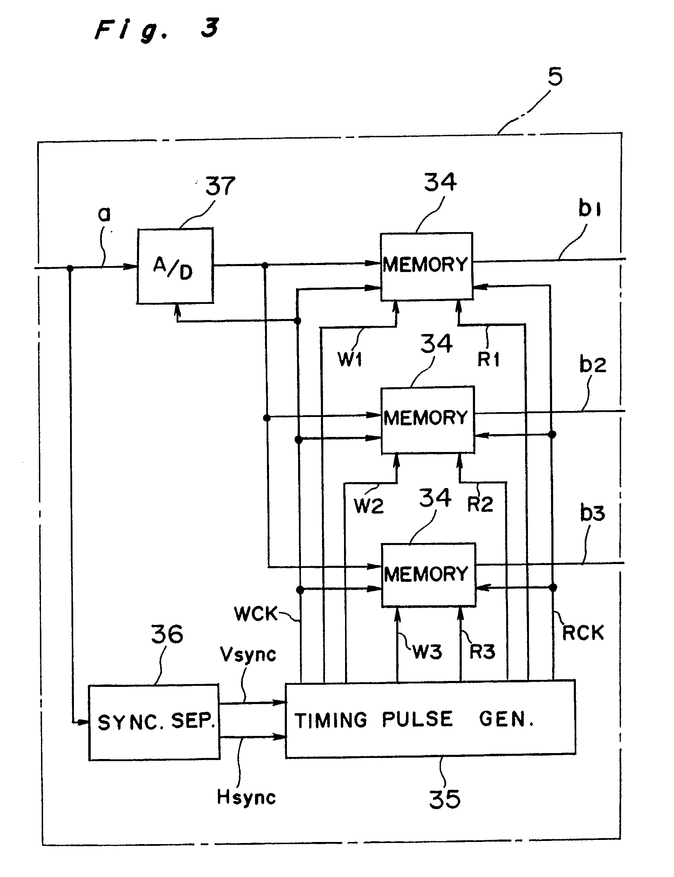

Fig. 3 shows the time-base expansion divider 5 in detail. The time-base expansion divider 5 is constituted by three memory circuits 34, a timing pulse generator 35, a synchronous separator 36 and an A/D converter 37. The synchronous separator 36 separates a vertical synchronous signal Vsync and a horizontal synchronous signal Hsync from the video signal and outputs the signals Vsync and Hsync to the timing pulse generator 35.

The timing pulse generator 35 generates a write clock WCK for controlling the memory circuits 34, a read clock RCK, write start pulses W1, W2 and W3 and read start pluses R1, R2 and R3. In this embodiment, frequency of the read clock RCK is set at about one-third of that of the write clock WCK. Meanwhile, the write start pulses W1, W2 and W3 and the read start pulses R1, R2 and R3 may be used in common, namely W1 = R1, W2 = R2 and W3 = R3 and in this case, three layers are required to be provided for the memory circuits 34, respectively.

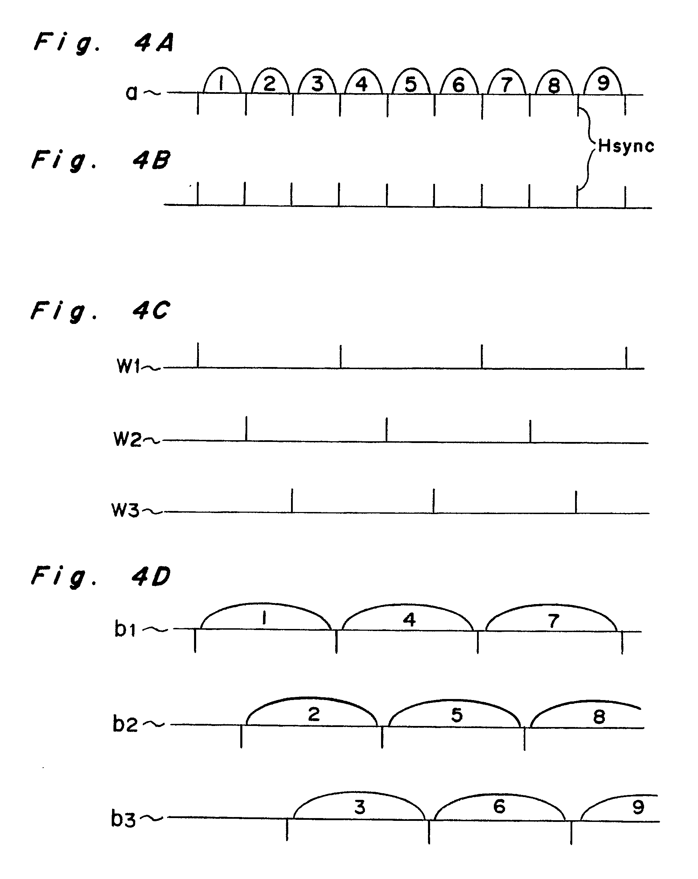

Figs. 4A to 4D schematically illustrate relation between the clocks and the video signal at this time. Fig. 4A shows the input signal, Fig. 48 shows the horizontal synchronous signal Hsync, Fig. 4C shows the three-layer write start pulses acting also as the read start pulses and Fig. 4D shows wave forms of the signals b1, b2 and b3 outputted from the memory circuits 34, respectively. Thus, the time-base expansion divider 5 expands time base of the input signal and divides the input signal into three channels.

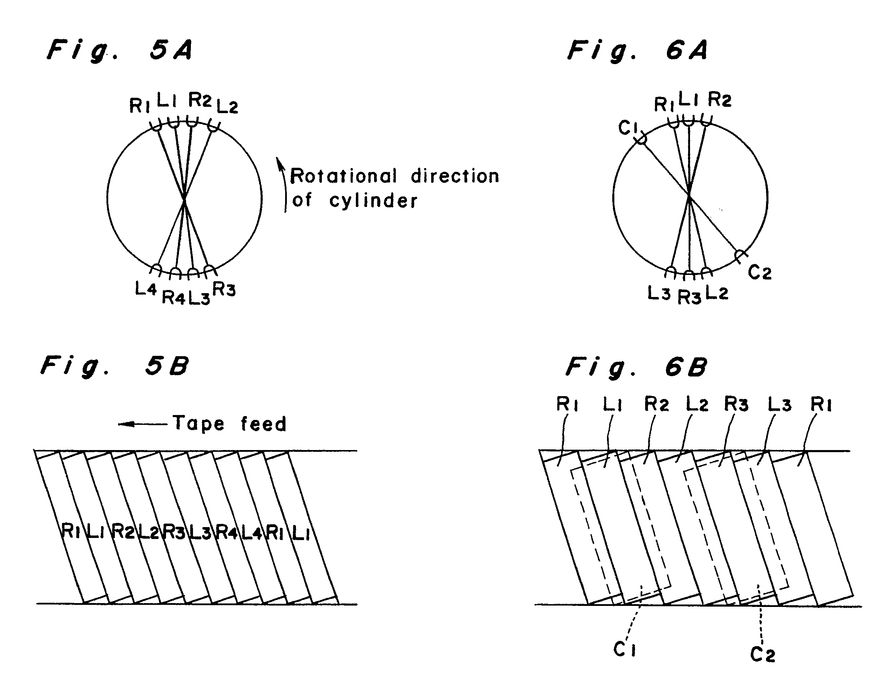

Hereinbelow, positions and azimuth angles of the heads on the rotating cylinder 11 are described with reference to Figs. 5A to 9A and corresponding recording patterns are described with reference to Figs. 58 to 98. In these figures, characters Rn and Ln denote right and left orientations of the azimuth angles of the heads, respectively, while character On represents a distinct azimuth angle which is neither Rn nor in. Fig. 5 shows a 4-channel, 2-azimuth system in which the color information is recorded and reproduced by using, for example, heads R1 and R3 and the luminance signal information is recorded and reproduced by the remaining heads. In this system, overlap writing on the recording tracks does not take place.

Fig. 6 shows a 4-channel, 4-azimuth system or a 4-channel, 3-azimuth system in which the color information is recorded at a deep layer of the tape by heads C1 and C2.

Overlap writing of the luminance signal information is performed on the recording track of the color information by using heads R1, L1, R2, L2, R3 and L3. In this case, azimuth of the heads C1 and C2 should be neither Rn nor Ln but the azimuth angles of C1 and C2 may be oriented in opposite directions or the same.

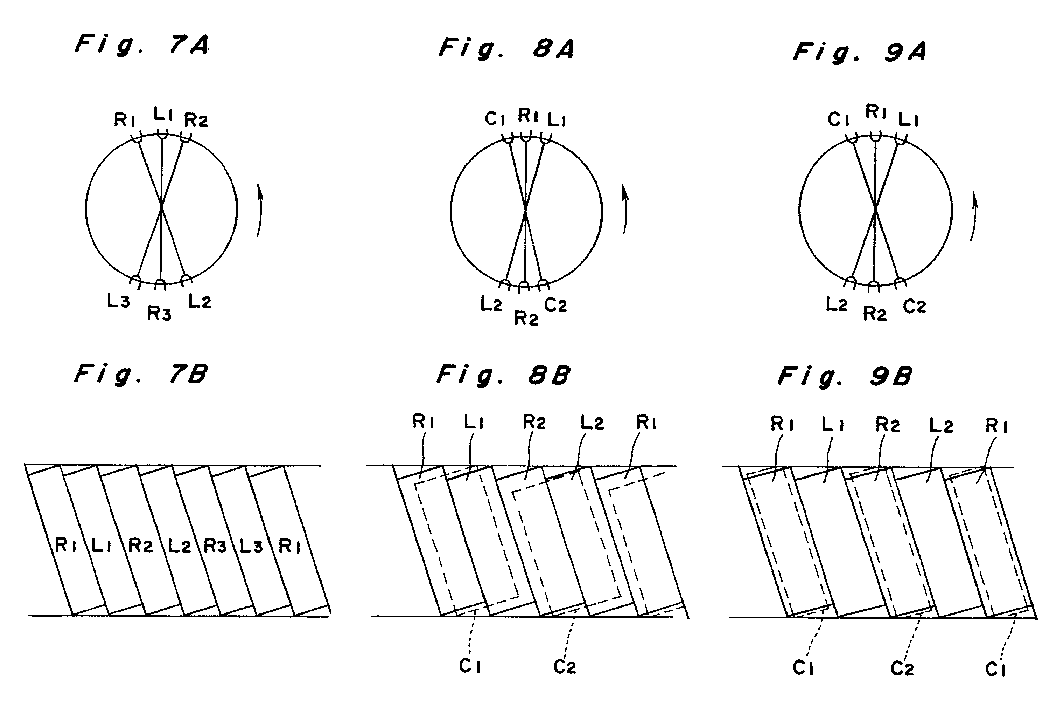

Fig. 7 shows a 3-channel, 2-azimuth system in which the color information is recorded by using, for example, the heads R1 and L2 and the luminance signal information is recorded by the remaining heads. In this system, overlap writing on the recording tracks does not take place.

Fig. 8 shows a 3-channel, 4-azimuth system or a 3-channel, 3-azimuth system in which the color information is recorded at a deep layer of the tape by the heads C1 and C2. Overlap writing of the luminance signal inf ormation is performed on the recording track of the color information by using the heads R1, L1, R2 and L2. In this case, the azimuth of the heads C1 and C2 should be neither Rn nor Ln but the azimuth angles of C1 and C2 may be oriented in opposite directions or the same.

In the examples shown in Figs. 5 to 8, character R denotes a head having an azimuth angle of +10°, character L denotes a head having an azimuth angle of -10°, character C1 denotes a head having an azimuth angle of +30 and character C2 denotes a head having an azimuth angle of -30°.

Meanwhile, it can also be so arranged that the heads C1 and C2 have an identical azimuth angle of -30° and widths and mounting heights of the heads C1 and C2 are set such that the head R always overlaps the recording tracks of the heads C1 and C2. Fig. 9 shows this example. In this case, since azimuth loss between the recording tracks of overlap writing is increased, decrease in crosstalk between the tracks can be expected. Furthermore, since the heads C1 and C2 have an identical azimuth angle and reproduction can be performed by using either one of the heads C1 and C2, such a feature can be obtained that dropout of the color signal information can be reduced when the heads traverse the tracks during variable speed reproduction, etc.

In the above described embodiment, the luminance signal is employed as the first video signal, while the color difference signal and the audio signal are employed as the second signal. However, this embodiment is not restricted to this scheme. For example, only the color difference signal or only the audio signal may be recorded as the second signal. Meanwhile, in this embodiment, the line sequential color signal is employed as the color signal but a time-base multiplex signal in which time bases of the signals Pr and Pb are compressed to approximately half, respectively may act as the color signal. Furthermore, in this embodiment, the FM or PCM audio signal information is frequency multiplexed to the color signal information but this frequency multiplexing is not necessarily required to be performed.

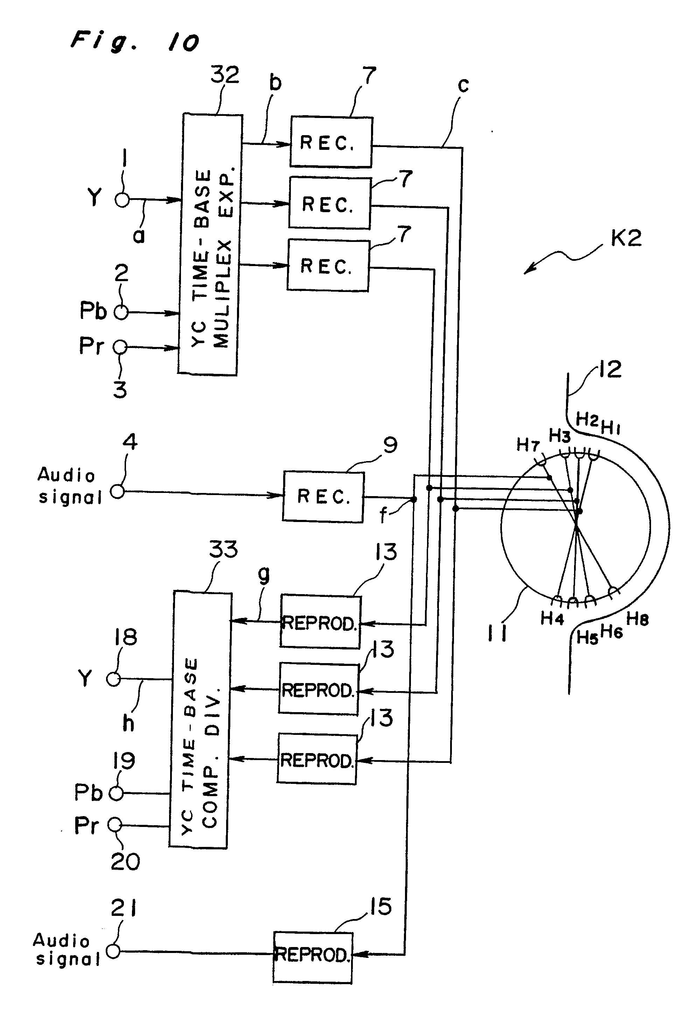

Fig. 10 shows a magnetic recording and reproducing apparatus K2 according to a second embodiment of the present invention. In the apparatus K2, a single time-base multiplex signal into which the luminance signal and the color difference signal are compressed in time base is employed as the first video signal and the audio signal is employed as the second signal. In Fig. 10, a YC time-base multiplex expander 32 generates a single signal by compressing time bases of the luminance signal and the color difference signal and then, expands time base of the single signal so as to divide the single signal into n channels. The YC time-base multiplex expander 32 is slightly more complicated than the time-base expansion divider 5 of Fig. 3 in that the YC time-base multiplex expander 32 additionally includes a circuit for processing the color difference signal. However, time-base multiplexing is a known technology. Needless to say, the apparatus K2 may also employ such an arrangement in which a single time-base multiplex signal is generated by time-base expanding the luminance signal and time-base compressing the color difference signal such that a memory output is immediately divided into n channels without dividing the single time-base multiplex signal into n channels. Apparently, a YC time-base multiplex compression divider 33 performs an operation reverse to that of the YC time-base multiplex expander 32. The recording unit 7 and the reproduction unit 13 are the same as those shown in Fig. 1.

In the above described first and second em-

7      EP 0 418 767 A2      8

bodiments, the luminance signal acting as the first video signal is divided into two or three channels. However, the present invention is not restricted to this scheme. For example, the luminance signal may also be divided into four or five channels.

Furthermore, in the above embodiments, the number of rotations of the cylinder is usually determined such that one rotation of the cylinder corresponds to one frame of the video signal on the assumption that the cylinder is rotated at 1,800 rpm. However, the present invention is not restricted to this scheme. For example, in the systems of Figs. 5 to 9, the cylinder may be rotated two times per frame of the video signal by setting rotational speed of the cylinder at 3,600 rpm. Furthermore, a half rotation, three rotations, etc. of the cylinder per frame of the video signal may be used within the scope of the present invention.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

## Claims

1. A magnetic recording and reproducing apparatus for recording and reproducing wide-band signals, comprising:
a time-base expansion and division means which at the time of recording, expands time base of a first video signal approximately n times while simultaneously dividing the first video signal into n channels where character n denotes a natural number not less than two;
a first recording means which frequency modulates the first video signal of each channel so as to generate a first recording signal;
an n-channel first recording head means for recording on a recording medium, the first recording signal so as to reproduce an n-channel first modulation signal;
a second recording means for modulating a second signal so as to generate a second recording signal;
a one-channel second recording head means for recording the second recording signal so as to reproduce a second modulation signal;
a first reproduction means which at the time of reproduction, demodulates the n-channel first modulation signal reproduced by said n-channel first recording head means so as to generate an n-channel first demodulation signal;
a time-base compression means which compresses time base of the n-channel first demodulation signal and then, synthesizes the n-channel first demodulation signal so as to generate a first reproduction video signal; and
a second reproduction means for demodulating the second modulation signal reproduced by said one-channel second recording head means;
whereby the first video signal is divided into n channels and then, is recorded and reproduced, while the second signal is recorded and reproduced in one channel.

2. A magnetic recording and reproducing apparatus as claimed in Claim 1, wherein said second recording head means is disposed downstream of said first recording head means in a rotational direction of a cylinder;
wherein said second recording head means records on a recording track of a magnetic tape to its deep layer, while said first recording head means records on said recording track and has an azimuth angle different from that of said second recording head means.

3. A magnetic recording and reproducing apparatus as claimed in Claim 2, wherein said first recording head means performs overlap writing on a whole or a large portion of said recording track recorded thereoh by said second recording head means and the azimuth angle of said first recording head means is oriented in a direction opposite to that of said second recording head means.

4. A magnetic recording and reproducing apparatus as claimed in Claim 1, wherein the first video signal is a luminance signal and the second signal is a single color signal obtained by converting two color difference signals.

5. A magnetic recording and reproducing apparatus as claimed in Claim 4, wherein the single color signal is a line sequential color difference signal obtained by alternately selecting the two color difference signals at an interval of a horizontal period.

6. A magnetic recording and reproducing apparatus as claimed in Claim 1, wherein the second recording signal recorded by said second recording head means is a signal obtained by frequency multiplexing an FM signal and an FM/PCM signal;
wherein the FM signal is obtained by converting two color difference signals into a single color signal and then, frequency modulating the single color signal to a high band, while the FM/PCM signal is obtained by frequency modulating or pulse code modulating an audio signal to a low band.

7. A magnetic recording and reproducing apparatus as claimed in Claim 1, wherein the first video signal is a single time-base multiplex signal obtained by time-base compressing a luminance signal and a color difference signal, while the second signal is an audio signal.

5

*Fig. 1*

Fig. 2

(A) a-

(B) b-

(C) c-

(D) d-

(E) e-

(F) f-

(G) g-

(H) h-

# Fig. 3

Fig. 4A

a ～

Fig. 4B

Hsync

Fig. 4C

W1 ～

W2 ～

W3 ～

Fig. 4D

b1 ～

b2 ～

b3 ～

Fig. 6A

Fig. 6B

Fig. 5A

Rotational direction of cylinder

Fig. 5B

Tape feed

Fig. 7A

Fig. 8A

Fig. 9A

Fig. 7B

Fig. 8B

Fig. 9B

Fig. 10